# EUROPÄISCHE PATENTANMELDUNG

(11) **EP 1 262 806 A2**
(43) Veröffentlichungstag der Anmeldung: **04.12.2002**
(21) Anmeldenummer: 02008469.5
(22) Anmeldetag: 15.04.2002
(51) Int. Cl.: G02B 6/16, G02B 6/26, G02B 6/42

(54) **Lichtwellenleiter**

(30) Priorität: 22.05.2001 DE 10125152
(71) Anmelder: Schott Glas, 55122 Mainz (DE)
(72) Erfinder: Bewig, Lars, Dr., 37581 Bad Gandersheim (DE); Küpper, Thomas, 37581 Bad Gandersheim (DE)
(74) Vertreter: Sawodny, Michael-Wolfgang

(57) **Zusammenfassung**

Die Erfindung betrifft einen Lichtwellenleiter mit mindestens einer Faser (1), insbesondere Kunststoffaser, Glas- oder Quarzfaser, wobei die Faser ein Faserende (1.1) zur Lichteinkoppelung umfaßt.

Die Erfindung ist dadurch gekennzeichnet, daß das Faserende eine Infrarotreduzierende Beschichtung (2) umfaßt.

## Beschreibung

Die Erfindung betrifft einen Lichtwellenleiter mit einer oder mehreren Fasern, insbesondere Glas-, Quarz- oder Kunststoffasern.

Lichtwellenleiter spielen heutzutage insbesondere bei der optischen Datenübertragung, aber auch für Beleuchtungszwecke, eine immer größere Rolle. Diese Lichtwellenleiter umfassen mindestens eine Faser, häufig jedoch ein oder mehrere Bündel von Fasern, mittels welchen Lichtwellen von einem Ende zu dem anderen Ende des Lichtwellenleiters geleitet werden. Dazu muß an einem Ende des Lichtwellenleiters eine Lichteinkopplung in die Lichtleitfasern stattfinden. Für diese Lichteinkopplung werden in der Regel Reflektoren benutzt, wobei die Faser beziehungsweise das Faserende im Fokus fixiert wird.

Um die hohen Infrarotanteile von Halogenlichtquellen, aber auch von Entladungslampen von der Faser fernzuhalten, sind diese Reflektoren meist als Kaltlichtspiegel ausgebildet, mit einer Infrarotrestreflexion von typischerweise weniger als 20 Prozent. Der Einsatz immer größerer Wattagen als Beleuchtungsquelle erfordert dennoch zusätzliche Filter, um die Infrarotbelastung der Faser zu minimieren, damit die Faser nicht zerstört wird.

Besonders beim Einsatz von Lichtwellenleitem mit Kunststoffasern, welche besonders kostengünstig und einfach in der Herstellung sind, sind die Faserbeziehungsweise Faserenden durch eine zu große Infraroteinstrahlung stark gefährdet, da die Kunststoffasern noch wärmeempfindlicher sind als zum Beispiel Glasfasern. Zusätzlich sind Kunststoffasern in der Regel UV - empfindlich und verspröden durch UV - Bestrahlung.
Der Erfindung liegt die Aufgabe zugrunde, einen Lichtwellenleiter darzustellen, der gegenüber schädigender Lichteinstrahlung widerstandsfähiger ist und kostengünstig hergestellt werden kann.

Diese Aufgabe wird duch einen Lichtwellenleiter mit den Merkmalen des Anspruches 1 gelöst. Die abhängigen Ansprüche beschreiben besonders vorteilhafte Ausgestaltungen.

Der erfindungsgemäße Lichtwellenleiter umfaßt mindestens eine Faser, insbesondere Kunststoffaser, Glas- oder Quarzfaser. Die Faser umfaßt ein Faserende zur Lichteinkopplung. Die Lichteinkopplung kann dabei zum Beispiel wie vorhergehend dargestellt mittels Reflektoren erfolgen. Auf das Faserende ist eine Beschichtung aufgebracht, welche eine Infrarot-reduzierende Eigenschaft hat. Diese Infrarotreduktion kann dabei zum Beispiel durch Reflexion des Infrarotanteiles des eingestrahlten Lichtes erfolgen.

Durch die erfindungsgemäße Ausbildung des Lichtwellenleiters ist die Infrarotbelastung der Faser erheblich reduziert, und zusätzliche Infrarotfilter zwischen Reflektoren und Faser werden überflüssig.

Durch die erfindungsgemäße Beschichtung können auch problemlos Kunststoffasern zur Lichtwellenleitung eingesetzt werden.

Solche Kunststoffasern sind jedoch zusätzlich durch UV-Strahlung (ultraviolette Strahlung) gefährdet, da die UV-Strahlung den Kunststoff versprödet. In einer besonders vorteilhaften Ausgestaltung der Erfindung weist die Beschichtung des Faserendes daher zusätzlich UV - reflektierende oder UV - absorbierende, allgemein UV-reduzierende Eigenschaften auf. Diese Eigenschaften können der Beschichtung zum Beispiel durch den Einsatz von TiO₂ als Bestandteil der Schicht verliehen werden, da dieser Bestandteil einen besonders wirkungsvollen UV-Blocker darstellt. Auch eine Ausführung des Faserendes mit aufgebrachter Silberdiffusionsfarbe als Beschichtungsbestandteil ist vorteilhaft.

Besonders vorteilhaft kann die Beschichtung als IRC-Beschichtung ausgeführt sein, wie sie heute auf Halogenlampenkolben Stand der Technik ist. Diese Beschichtung hat den Vorteil, daß sie neben der hohen IR-Reflektivität im sichtbaren Wellenlängenbereich zusätzlich mit einer Antireflexfunktion ausgerüstet ist. Diese Antireflexfunktion erhöht die eingekoppelte Lichtmenge bei Lichtwellenleitern mit Beleuchtungsfasern und minimiert Reflexionen auf Datenübertragungsfasern, die zu Übertragungsfehlern führen.

Insbesondere umfaßt das Faserende zusätzlich eine Antikratzschicht, um die Empfindlichkeit gegen mechanische Beschädigung zu reduzieren.

Auch das Einbringen von Farbkonversionsfiltern in die Beschichtung ist vorteilhaft möglich. Bei Aufbringen eines solchen Schichtsystemes können der Beschichtung gezielt besondere Eigenschaften verliehen werden, wie zum Beispiel Farbtemperaturanpassung oder die Einkopplung von spektral schmalbandiger Beleuchtung.

Das Faserende ist in einer besonderen Ausgestaltung mit einer Mehrzahl von Schichten mit unterschiedlichen Brechungskoeffizienten ausgeführt. Eine solche Beschichtung kann besonders einfach die sichtbare Strahlung transmittieren und die Infrarotstrahlung reflektieren.

Das Aufbringen der Beschichtung auf die Faserenden insbesondere von Kunststoffasern erfolgt vorzugsweise mit dem PICVD-Verfahren, was eine besonders zuverlässige Haltbarkeit der Schicht auf der Faser gewährleistet und eine einfache Herstellung ermöglicht. Dadurch ist es besonders einfach, die Kunststoffaser an den Enden mit einer Antikratzschicht zu versehen. Es sind jedoch auch andere Verfahren zum Aufbringen der Schicht auf die Kunststoffaser oder auf Fasern anderer Materialien denkbar, beispielsweise seien nur PVD und Sputterverfahren (reaktiv und nicht reaktiv), LPCVD und plasma enhanced Verfahren genannt.

Nachfolgend soll die Erfindung anhand einer grafischen Darstellung und der zugehörigen Beschreibung näher erläutert werden.

### Es zeigt:

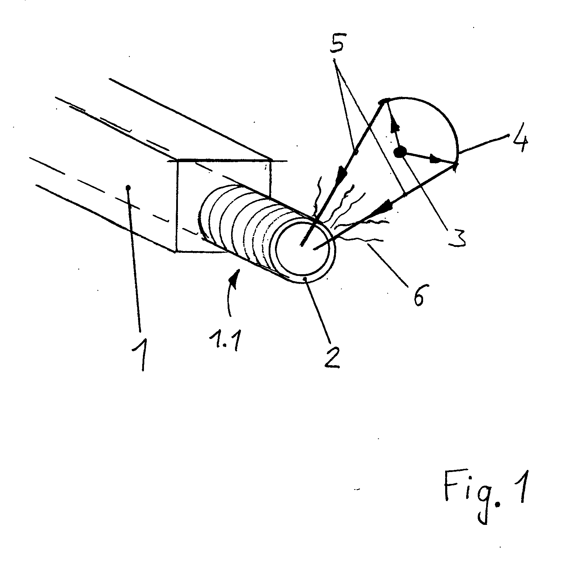

- Figur 1: einen erfindungsgemäßen Lichtwellenleiter.

Figur 1 zeigt eine Faser 1 in einem Lichtwellenleiter, deren Faserende 1.1 an einem Ende über den Lichtwellenleiter hinausragt. In das Faserende 1.1 erfolgt eine Lichteinkopplung mittels einer Lichtquelle 3 und eines Reflektors 4, der insbesondere als Kaltlichtspiegel ausgebildet sein kann.

Das von der Lichtquelle 3 ausgehende Licht wird durch den Reflektor 4 fokusiert. Das Faserende 1.1 der Faser des Lichtwellenleiters ist in den Fokus des Reflektors 4 geschaltet, so daß die gespiegelten beziehungsweise fokusierten Lichtwellen 5 nahezu vollständig in das Faserende 1.1 eingekoppelt werden.

Das Faserende 1.1 weist eine Infrarot-reduzierende Beschichtung 2 auf. Die Beschichtung 2 hat Infrarot-reflektierende Eigenschaften, so daß der Infrarotbereich des auf dem Faserende 1.1 fokusierten Lichtes durch die Beschichtung 2 reflektiert wird und damit vom Faserende 1.1 ferngehalten wird. Die Reflexion des Infrarotlichtes ist als Schlangenlinie dargestellt und mit dem Bezugszeichen 6 gekennzeichnet.

Da somit ein Wärmeeintrag in das Faserende 1.1 nahezu vollständig verhindert wird, kann auch eine kostengünstige Kunststoffaser zur Lichtwellenleitung eingesetzt werden.

### Bezugszeichenliste

- 1: Faser
- 1.1: Faserende
- 2: Beschichtung
- 3: Lichtquelle
- 4: Reflektor
- 5: Lichtwellen
- 6: Infrarotreflexion

## Patentansprüche

1. Lichtwellenleiter mit mindestens einer Faser (1), insbesondere Kunststoffaser, Glas- oder Quarzfaser;
1.1 die Faser (1) umfaßt ein Faserende (1.1) zur Lichteinkoppelung;
**dadurch gekennzeichnet, daß**
1.2 das Faserende (1.1) eine Infrarot-reduzierende Beschichtung (2) umfaßt.

2. Lichtwellenleiter nach Anspruch 1, **dadurch gekennzeichnet, daß** das Faserende (1.1) eine IR-reflektive Beschichtung umfaßt.

3. Lichtwellenleiter nach einem der Ansprüche 1 oder 2, **dadurch gekennzeichnet, daß** die Beschichtung (2) UV-reflektierende Eigenschaften aufweist.

4. Lichtwellenleiter nach einem der Ansprüche 1 bis 3, **dadurch gekennzeichnet, daß** die Beschichtung (2) UV-absorbierende Eigenschaften aufweist.

5. Lichtwellenleiter nach einem der Ansprüche 3 oder 4, **dadurch gekennzeichnet, daß** die Beschichtung (2) eine Silberdiffusionsfarbe und insbesondere Schichtpakete aus TiO₂ als UV-Blocker umfaßt.

6. Lichtwellenleiter nach einem der Ansprüche 1 bis 5, **dadurch gekennzeichnet, daß** die Beschichtung (2) Antireflexeigenschaften im sichtbaren Wellenbereich aufweist.

7. Lichtwellenleiter nach einem der Ansprüche 1 bis 6, **dadurch gekennzeichnet, daß** das Faserende (1.1) eine Antikratzschicht umfaßt.

8. Lichtwellenleiter nach einem der Ansprüche 1 bis 7, **dadurch gekennzeichnet, daß** die Beschichtung (2) einen Farbkonversionsfilter umfaßt.

9. Lichtwellenleiter nach einem der Ansprüche 1 bis 8, **dadurch gekennzeichnet, daß** das Faserende (1.1) eine Mehrzahl von Schichten mit unterschiedlichen Brechungskoeffizienten umfaßt.

10. Lichtwellenleiter nach einem der Ansprüche 1 bis 9, **dadurch gekennzeichnet, daß** die Beschichtung (2) mittels wenigstens eines der folgenden Verfahren auf das Faserende (1.1) aufgebracht ist:
- PICVD (Plasma Impulse Chemical Vapor Deposition)
- LPCVD (Low Pressure Chemical Vapor Deposition)
- PECVD (Plasma Enhanced Chemical Vapor Deposition)
- reaktive und nicht reaktive Sputterverfahren
- PVD - Verfahren
